(19) Europäisches Patentamt
European Patent Office
Office européen des brevets

(11) Publication number: **0 178 261 A2**

(12) # EUROPEAN PATENT APPLICATION

(21) Application number: **85810458.1**

(22) Date of filing: **07.10.85**

(51) Int. Cl.⁴: **C 07 F 9/65**, A 61 K 31/675

(30) Priority: **10.10.84 US 659249**
**18.07.85 US 756368**
**15.08.85 US 766116**

(43) Date of publication of application: **16.04.86**
**Bulletin 86/16**

(84) Designated Contracting States: **AT BE CH DE FR GB IT LI LU NL SE**

(71) Applicant: **SANDOZ AG, Lichtstrasse 35, CH-4002 Basel (CH)**
(84) Designated Contracting States: **BE CH FR GB IT LI LU NL SE**

(71) Applicant: **SANDOZ-PATENT-GMBH, Humboldtstrasse 3, D-7850 Lörrach (DE)**
(84) Designated Contracting States: **DE**

(71) Applicant: **SANDOZ-ERFINDUNGEN Verwaltungsgesellschaft m.b.H., Brunner Strasse 59, A-1235 Wien (AT)**
(84) Designated Contracting States: **AT**

(72) Inventor: **Jaeggi, Christian, 44 Center Grove Road, Apt. F48, Randolph, N.J. 07869 (US)**
Inventor: **Lee, Mark L., 84 Espanong Road, Lake Hopatcong, N.J. 07849 (US)**
Inventor: **Tomesch, John Charles, 5 Cliff Court, Succasunna, N.J. 07876 (US)**

(54) **Substituted 2-furanyl or 5-oxo-2-furanyl-alkoxy phosphoryl alkyl cyclimmonium salts.**

(57) Compounds of formula I

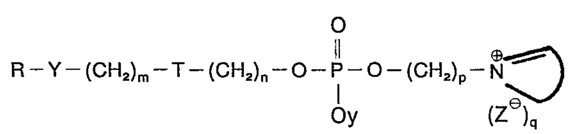

wherein R is n-$C_{12-20}$alkyl, alkenyl or alkynyl, $C_{12-24}$alkoxyalkyl, phenyl or $C_{7-9}$phenylalkyl,

Y is $CH_2$; O; 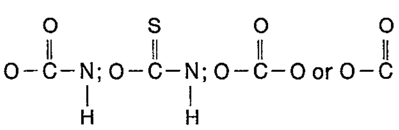

T is 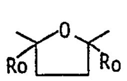 or 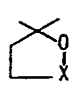

wherein Ro is hydrogen or methyl; and

X is $CH_2$ or 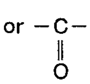

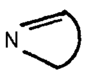 represents a 5- or 6-membered mono-cyclic ring optionally containing one further heteroatom selected from nitrogen or sulphur; or a 10-membered bicyclic ring optionally containing one further nitrogen atom; each of which rings may be unsubstituted or either mono, di-, or tri-substituted by $C_{1-4}$alkyl or mono-substituted by $CF_3$, halo, COOH or $COOCH_3$

$Z^{\ominus}$ is a pharmaceutically acceptable anion,
m is 1 or 2;
n is 1 or 2;
p is 2 to 8; and
y is ⊖ and q is 0; or
y is H and q is 1,

which are indicated for use as pharmaceuticals particularly for the use in inhibiting PAF induced blood platelet aggregation or treating PAF mediated bronchoconstriction and extravasation and PAF induced hypotension and ischemic bowel disease.

EP 0 178 261 A2

0178261

Case 600-7021

SUBSTITUTED 2-FURANYL OR 5-OXO-2-FURANYL-ALKOXY PHOSPHORYL ALKYL CYCLIMMONIUM SALTS

The present invention relates to certain substituted 2-furanyl or 5-oxo-2-furanyl-alkoxy phosphoryl alkyl cyclimmoniumn salts and to their use as platelet activating factor (PAF) receptor antagonists and as inhibitors of PAF-induced blood platelet aggregation. The invention also relates to pharmaceutical compositions containing the afore-mentioned compounds as an active ingredient thereof and to the method of using such compositions for inhibiting PAF-mediated bronchoconstriction and extravasation, PAF-induced hypotension and PAF-involved ischemic bowel disease.

Blood platelets, also called thrombocytes, are well recognized as important cellular elements that circulate in the blood. Their role is to staunch bleeding by forming clots in broken blood vessels, i.e., they are nature's corks. They have, however, been implicated in a variety of immunologically mediated forms of tissue injury. Their participation in these processes involved the release of platelet activating factor (PAF) which in turn interacts with the platelets, inducing aggregation and secretion of granular constituents. As a further consequence of platelet activation, there may result a fatal reaction consisting of acute pulmonary hypertension, right heart dilation, systemic hypotension, significant increases in pulmonary vascular resistance, decrease in dynamic lung compliance and often complete pulmonary apnea. More recently, evidence has been obtained which appears to implicate platelet activating factor in the formation of fibromuscular lesions of the arterial walls of the aorta and coronary arteries, thereby contributing to the development of atherosclerosis. Further, the possible role of PAF in ischemic bowel disease, particularly necrotizing enterocolitis (NEC) has recently been described, thereby implicating PAF in the development of disorders leading to bowel necrosis.

More particularly the invention concerns compounds of formula I

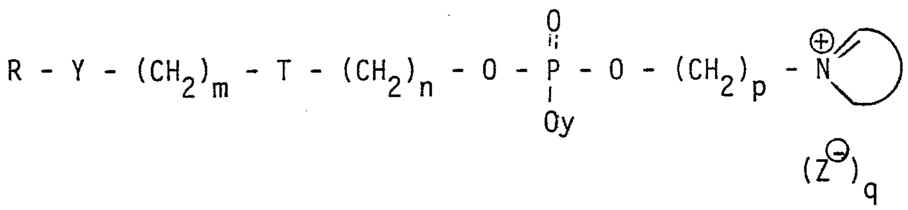 I

wherein R is n-$C_{12-20}$alkyl, alkenyl or alkynyl, $C_{12-24}$alkoxyalkyl, phenyl or $C_{7-9}$phenylalkyl;

Y is $CH_2$; O; $O-\overset{O}{\overset{\|}{C}}-\underset{H}{N}$; $O-\overset{S}{\overset{\|}{C}}-\underset{H}{N}$; $O-\overset{O}{\overset{\|}{C}}-O$ or $O-\overset{O}{\overset{\|}{C}}$;

T is 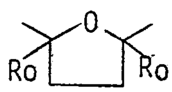 or 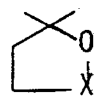 ;

wherein Ro is hydrogen or methyl; and

X is $CH_2$ or $-\underset{O}{\underset{\|}{C}}-$ ;

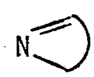 represents a 5- or 6-membered mono-cyclic ring optionally containing one further heteroatom selected from nitrogen or sulphur; or a 10-membered bicyclic ring optionally containing one further nitrogen atom; each of which rings may be unsubstituted or either mono-, di-, or tri-substituted by $C_{1-4}$alkyl or mono-substituted by $CF_3$, halo, COOH or $COOCH_3$

$Z^{\ominus}$ is a pharmaceutically acceptable anion,

m is 1 or 2;

n is 1 or 2;

p is 2 to 8; and

y is $\ominus$ and q is 0; or

y is H and q is 1.

As will be clear to one skilled in the art and as is evident from the process description hereinafter, the point of attachment of groups Y to the adjacent R group is as follows:

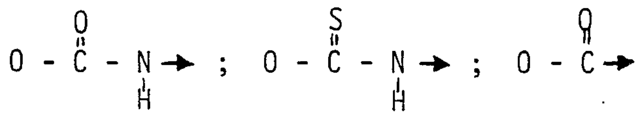

The compounds of formula I can be divided into three sub-classes namely those wherein T is 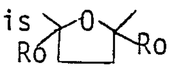 (Ia)

and those wherein T is 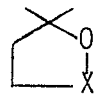 and X is $CH_2$ (Ib) or X is 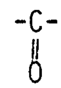 (Ic).

Preferred compounds of sub-class Ia are those wherein

R is n-$C_{14-20}$alkyl, alkenyl or alkynyl or $C_{12-20}$alkoxyalkyl, phenyl or benzyl,

Y is $CH_2$; O; 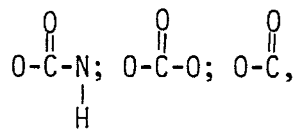

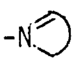 is thiazolium, pyridinium, pyridazinium, quinolinium or isoquinolinium ring which is unsubstituted or either mono-, di- or trisubstituted by $C_{1-4}$alkyl or monosubstituted by $CF_3$, halo, COOH or $COOCH_3$,

p is 2 to 6,

and the Ro's, m, n, y, Z and q are as defined above (compounds Ia').

More preferred compounds of sub-class Ia are those wherein

R is n-$C_{16-20}$alkyl, alkenyl or alkynyl or $C_{14-18}$alkoxyalkyl, phenyl or benzyl,

Y is O, 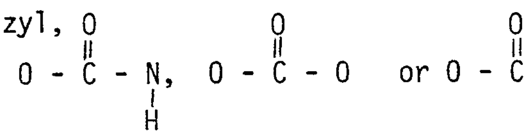 or

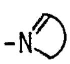 is a thiazolinium, pyridinium or quinolinium ring which is unsubstituted or either mono-, di- or trisubstituted by $C_{1-4}$alkyl or monosubstituted by $CF_3$, halo, COOH or $COOCH_3$,

p is 2 to 4,

and the Ro's, m, n, y, Z and q are as defined above (Compounds Ia").

Especially preferred compounds of sub-class Ia are those wherein

R is n-$C_{16-18}$alkyl, alkenyl or alkynyl or $C_{14-18}$alkoxyalkyl,

Y is O, $O-\overset{O}{\overset{\|}{C}}-\underset{H}{N}$ or $O-\overset{O}{\overset{\|}{C}}$,

p is 2,

N◯ is as defined for Ia",

and the Ro's,m, n, y, Z and q are as defined above (Compounds Ia'").

For sub-classes Ib and Ic the corresponding preferred groups are those wherein

(i) R is n-$C_{14-20}$alkyl, alkenyl or alkynyl or $C_{12-20}$alkoxyalkyl; n is 1 and the remaining substituents are as given for Ia' (Compounds Ib' and Ic').

(ii) R is n-$C_{16-20}$alkyl, alkenyl or alkynyl or $C_{14-18}$alkoxyalkyl; n is 1 and the remaining substituents are as given for Ia" (Compounds Ib" and Ic").

(iii) R is n-$C_{16-18}$alkyl, alkenyl or alkynyl or $C_{14-18}$alkoxyalkyl; n is 1 and the remaining substituents are as given for Ia"' (Compounds Ib'" and Ic'").

A further compound group covers those of subclasses Ib and Ic wherein

R is n-$C_{12-20}$alkyl;

X is $CH_2$ or C=O;

Y is $CH_2$, O or $O-\overset{O}{\overset{\|}{C}}-\underset{H}{N}$;

y is ⊖ ;

-N◯ is a ring of formula 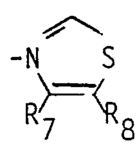

wherein $R_7$ and $R_8$ are independently hydrogen, $C_{1-4}$alkyl or $CF_3$;

m is 1 or 2;

n is 1,

p is 2 to 4 and q is 0 (Compounds Ip).

The compounds according to the invention may be prepared by reacting a compound of formula $\bar{C}$

$$R - Y - (CH_2)_m - T - (CH_2)_n - O - \underset{Oy}{\overset{O}{\overset{\|}{P}}} - O - (CH_2)_p - Br \qquad \bar{C}$$

with a compound of formula CC

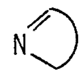 CC

wherein R, Y, T, m, n, p and y are as defined above, and recovering the product in inner salt form or in pharmaceutically acceptable acid addition salt form.

The reaction is suitably carried out in the presence of an inert solvent such as an aromatic hydrocarbon e.g. benzene or toluene, a lower alkyl nitrile e.g. acetonitrile or a polar aprotic solvent e.g. dimethylformamide at a temperature 50°-100°. According to the nature of CC it may be employed as both reactant and solvent (e.g. when pyridine).

The starting material of formula C may be prepared by reacting a compound of formula CCC

$$R - Y - (CH_2)_m - T - (CH_2)_n - OH \quad CCC$$

with a compound of formula CCCC

$$Cl_2\overset{O}{\overset{\|}{P}}-O-(CH_2)_p-Br \quad CCCC$$

This reaction is carried out in conventional manner e.g. in the presence of an amine base such as pyridine or triethylamine and in an inert organic solvent, e.g., an aromatic hydrocarbon such as toluene, benzene or xylene, a halogenated aliphatic hydrocarbon, such as methylene chloride, chloroform or carbon tetrachloride, a halogenated aromatic hydrocarbon, e.g., chlorobenzene, or an ether such as diethyl ether. The reaction may be carried out at temperatures of from 20° to 70°.

The product thus produced is then subjected to basic hydrolysis, e.g., by suspending the product in water. The hydrolysis is conveniently carried out at a temperature of from 20° to 100°C.

The starting material of formula CCC may be prepared according to or analogously to the reactions shown in the following schemes.

## LEGEND FOR REACTION SCHEMES

$R_1$ = n-$C_{14-23}$alkyl, alkenyl or alkynyl, $CH_2OR$ or $CH_2CH_2OR$ (= Ra) <u>or</u> $(CH_2)_m$-$OC(CH_3)_2OCH_3$ (=Rb)

$R_2$ = n-$C_{1-4}$alkyl

Bn = benzyl

HX' = organic- or mineral-acid

M = alkali or alkaline earth metal

J = NCO, NCS, chlorocarbonate or carboxylchloride

Y' = 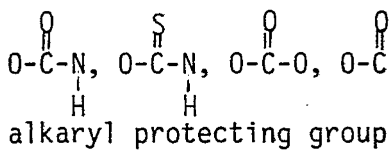

G = alkaryl protecting group e.g. benzyl

E' = Cl, Br, I

m' = 2 or 3

T' = 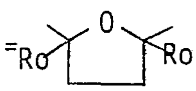 or 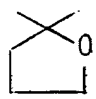

E = Cl, Br or I, phenylsulfonyl, toluenesulfonyl, $C_{1-4}$alkylsulfonyl (e.g. methylsulfonyl)

Examples of conditions for the processes in the reaction schemes are given by way of illustration in the following tables or in the examples hereinafter.

## ABBREVIATIONS

IO = inert organic

HC = hydrocarbon

HalHC = halogenated hydrocarbon

THF = tetrahydrofuran

PA = polar aprotic

DMSO = dimethylsulfoxide

DMA = dimethylacetamide

DMS = dimethylsulfide

LDA = lithium diisopropylamide

REACTION SCHEME II

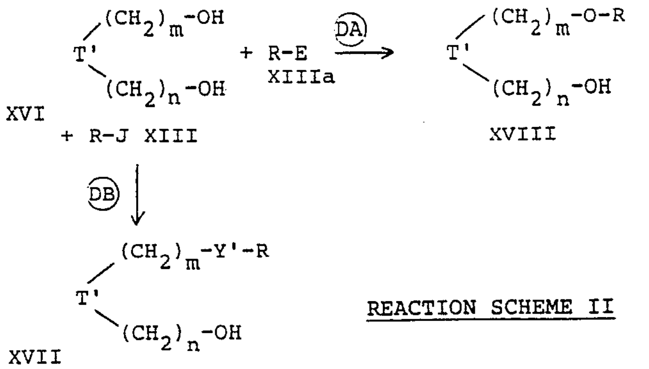


REACTION SCHEME I

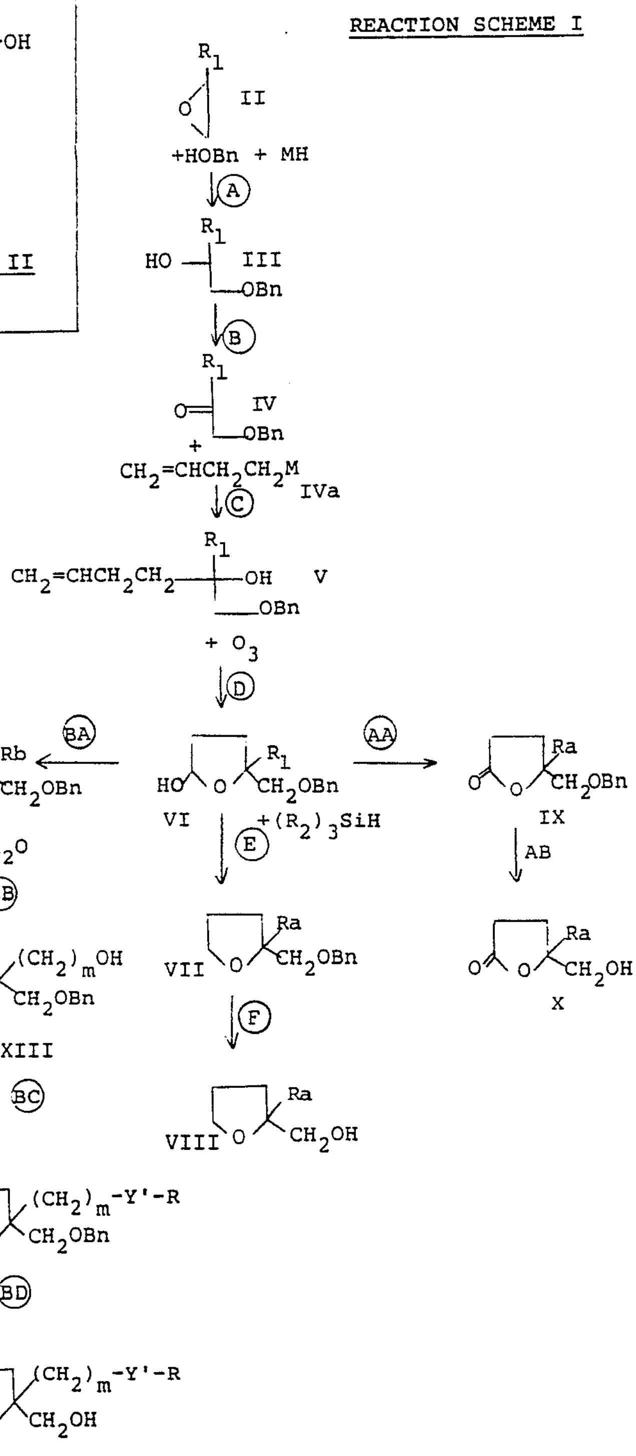


REACTION SCHEME III

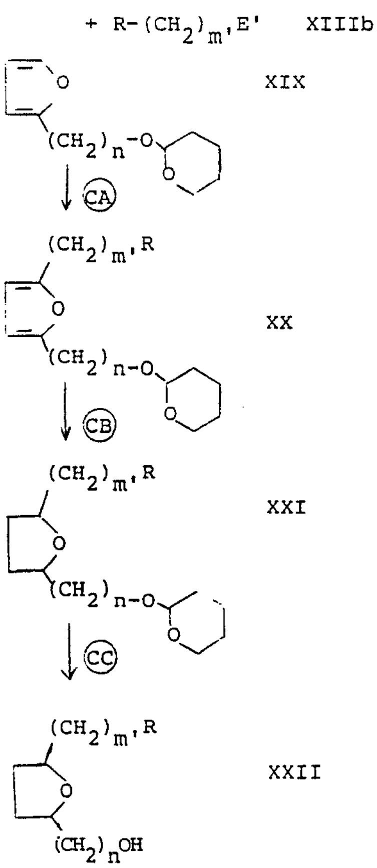

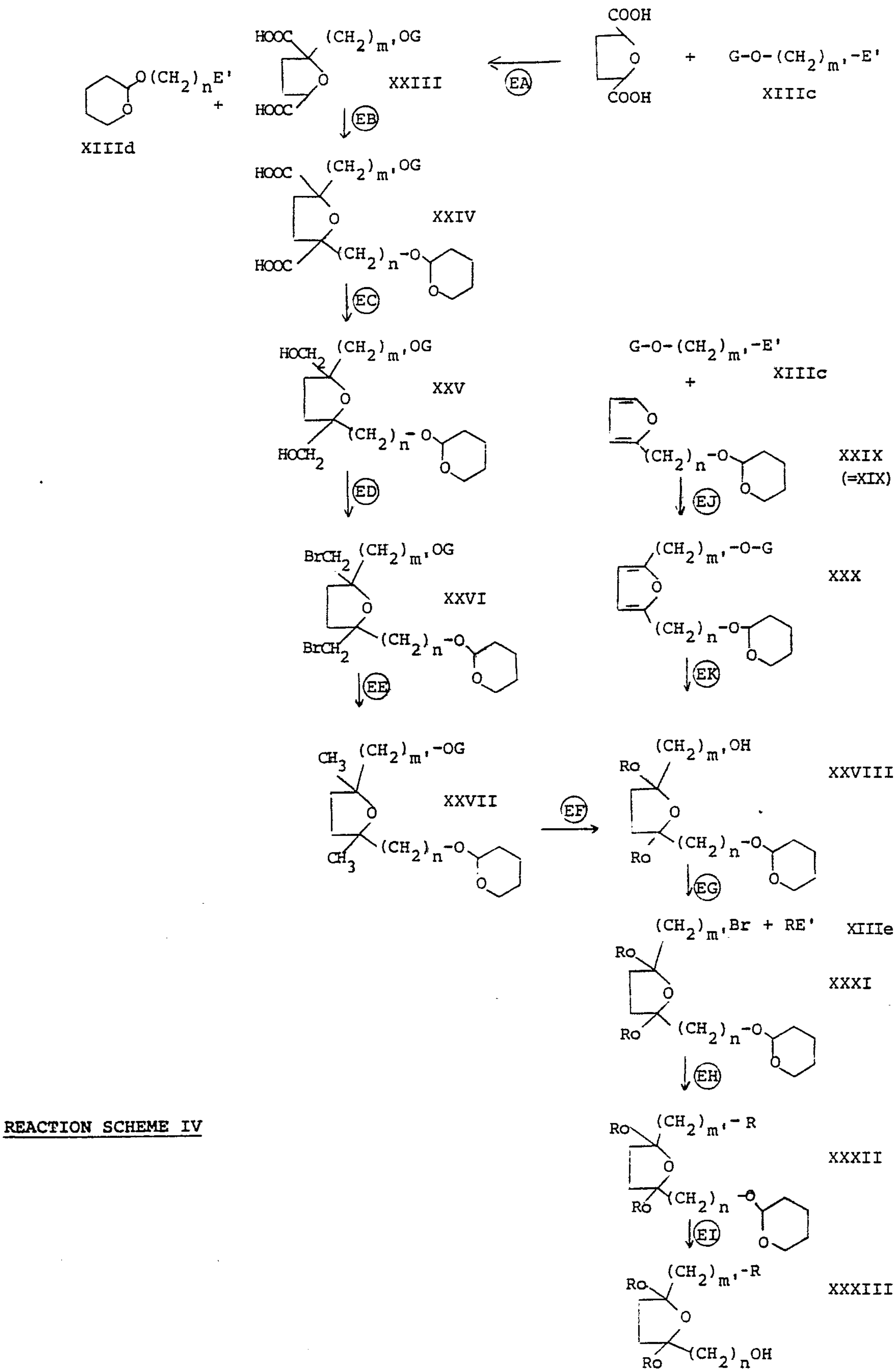


XIIId XXIII XIIIc XXIV XXV XIIIc XXIX (=XIX) XXVI XXX XXVII XXVIII XIIIe XXXI XXXII XXXIII

REACTION SCHEME IV

| REACTION | TYPE / STEPS | SPECIAL CONDITIONS/REACTANTS | TEMPERATURE | SOLVENT |
|---|---|---|---|---|
| (A) | | MH preferably alkali-metal hydride esp. NaH | 30-100° | I.O. such as: dialkylamide e.g. DMF, DMA; aromatic HC e.g. toluene, benzene, xylene; cyclic ether e.g. THF |
| (B) (AA) | oxidation | (i) chromium based oxidant e.g. pyridinium chlorochromate | 20-40° | I.O. such as:HalHC e.g. $CH_2Cl_2$ |
| | | or | | |
| (BA) | | (ii) a) anhydride e.g. $(CF_3CO)_2O$ or acid chloride e.g. $(COCl)_2$ plus e.g. DMSO | -78-25° esp.-78° to 0° | I.O. such as:HalHC e.g. $CH_2Cl_2$ |
| | | b) $C_{1-3}$trialkylamine e.g. $(C_2H_5)_3N$ | 0-25° | aromatic HC e.g. toluene or xylene |
| (C) | | a) preparation of IVa from M e.g. Li or Mg + haloalkene e.g. 4-bromo-1-butene | 20-65° | aliphatic or cyclic ether e.g. THF |
| | | b) react IVa with IV | -78-20° | ——"—— or mixture e.g. with pentane or hexane |

| REACTION | TYPE / STEPS | SPECIAL CONDITIONS/REACTANTS | TEMPERATURE | SOLVENT |
|---|---|---|---|---|
| (D) | | a) $O_3$ in $O_2$ stream<br>b) add reducing agent e.g. trialkyl phosphite or di-alkyl sulphide e.g. DMS | -78 to -50°<br>20-30° | as B(i) |
| (E) | | trialkyl silane e.g. $(C_2H_5)_3SiH$ + Lewis acid e.g. borontrifluoride etherate as catalyst | -30 to 0° | as B(i) |
| (F) (AB) (BD) | hydrogenolysis | Pd, PdOH, Pt/C as catalyst + $H_2$ at pressure of 15 to 65 lbs | 20-50° | lower alkanol e.g. $C_2H_5OH$, $CH_3OH$ + optionally $<$15% $H_2O$ |
| | | When R is alkenyl or alkynyl debenzylation is preferably carried out by employing $(R_2)_3SiI$ | 20-110° | cosolvent such as aromatic HC e.g. benzene or toluene; lower alkylnitrile e.g. acetonitrile |
| (BB) | | HX'=e.g. HCl, $H_2SO_4$ or p-toluenesulfonic acid | 0-25° | cosolvent such as cyclic ether e.g. THF, in $H_2O$ |

| REACTION | TYPE / STEPS | SPECIAL CONDITIONS/REACTANTS | TEMPERATURE | SOLVENT |
|---|---|---|---|---|
| (BC) (DB) | | amine base e.g. pyridine or $(C_2H_5)_3N$ | 20-100° | cosolvent such as: aromatic HC e.g. toluene or benzene; HalHC e.g. $CHCl_3$, $CH_2Cl_2$ or chlorobenzene; dialkylether e.g. $(C_2H_5)_2O$; cyclic ether e.g. THF; dialkylamide e.g. DMF |
| (DA) | | MOH<br>optionally phase transfer catalyst e.g. tetrabutyl ammonium bisulfate | 20-80° | I.O. such as: aromatic HC e.g. benzene, toluene; cyclic ether e.g. THF, dioxane; PA e.g. DMSO,DMF,DMA |
| (CA) | generation of carbanion | a) XIX + nBuLi<br><br>b) add XIIIb | -80 to -60°<br>"<br>warming to 25° | dialkylether e.g. $(C_2H_5)_2O$; cyclic ether e.g. THF<br>" |
| (CB) | hydrogenation | 5% $Rh-Al_2O_3$ + 1-3 atm $H_2$ | | ether e.g. THF; alkanol e.g. $C_2H_5OH$ |

| REACTION | TYPE / STEPS | SPECIAL CONDITIONS/REACTANTS | TEMPERATURE | SOLVENT |
| --- | --- | --- | --- | --- |
| (CC) | hydrolysis | organic acid e.g. arylsulfonic such as p-toluenesulfonic as catalyst | 10-50° | alkanol e.g. $CH_3OH$ |
| (EA) | generation of trianion | a) 3 eq. of strong base e.g. LDA | -80° to -50° | dialkylether e.g. $(C_2H_5)_2O$, cyclic ether e.g. THF |
| (EB) (EJ) | | b) add XIIIc or XIIId | " warming to 25° | " |
| (EC) | reduction | hydride e.g. $LiAlH_4$ in excess | 20-40° | dialkylether e.g. $(C_2H_5)_2O$ cyclic ether e.g. THF |
| (ED) (EG) | bromination | 2 eq. of triphenylphosphine dibromide in presence of pyridine | 0-85° | I.O. such as: lower alkylnitrile e.g. acetonitrile |
| (EE) | | 2 eq. $(nBu)_3SnH$ | 20-100° | none or I.O. such as: dialkylether e.g. $(C_2H_5)_2O$ |

| REACTION | TYPE / STEPS | SPECIAL CONDITIONS/REACTANTS | TEMPERATURE | SOLVENT |
|---|---|---|---|---|
| (EF) | hydrogenolysis | Pd/C; 1-3 atm $H_2$ | | lower alkanol e.g. $C_2H_5OH$ |
| (EK) | hydrogenation, hydrogenolysis | Pd/C; 1-3 atm $H_2$ | | ethylacetate |
| (EH) | formation of Grignard | a) Mg e.g. as slurry of shavings<br>b) add XIIIe | 0° to reflux | dialkylether e.g. $(C_2H_5)_2O$ |
| (EI) | mild hydrolysis | organic acid e.g. p-toluene-sulfonic mineral acid e.g. HCl preferably diluted | 10-50° | |
| | (EJ), (EK) and (EG) to (EI) are particularly suitable when R is a sensitive group as alkenyl or alkynyl | | | |

Intermediates containing substituents other than those described in the reaction schemes may be prepared analogously thereto or are either known or may be prepared analogously to known methods.

Starting materials set forth above are either known and/or may be obtained analogously to known methods in conventional manner.

Final products and intermediates may be isolated and purified in conventional manner. Intermediates, where appropriate, may be employed directly in the following step without purification.

As is evident to those skilled in the art, the compounds of formula I may exist in racemic or enantiomeric form and the invention is intended to cover all forms.

Enantiomeric forms may be recovered in conventional manner e.g. by resolution of end or intermediate products or by employing optically active starting materials.

The compounds also exist in the form of cis/trans-isomers when

T = 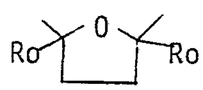 .

Examples of anions as $Z^{\ominus}$ are chloride, bromide, iodide, phosphate, hydrogenphosphate, metaphosphate, sulfate, hydrogen sulfate and perchlorate.

The compounds of formula I are indicated for use as platelet activating factor inhibitors as indicated by their ability to inhibit platelet activating factor (PAF)-induced human platelet aggregation in vitro according to the Platelet Aggregation Inhibition Assay test (PAIA test) as follows:

Human subjects are kept aspirin free for one week and fasted overnight. Platelet rich plasma (PRP) is prepared by centrifugation (200 x g) of freshly drawn blood, anti-coagulated with 0.38% sodium citrate (final concentration). Platelet count is adjusted to 250,000 per µl using platelet poor plasma (PPP) obtained by a second centrifugation (700 xg) of the blood sample. An aliquot (0.38 ml) of the PRP is dispensed into cuvettes and maintained at room temperature (22°C) until used (but for not more than two hours). The PRP-containing cuvettes are

incubated at 37°C and stirred at 900 rpm within a Payton Aggregometer which is activated to follow the light deflection pattern prior to the addition of the test compound. The test compound (dissolved in a suitable solvent mixture which does not influence platelet aggregation) is then added to a PRP-containing cuvette in an amount sufficient to provide a final concentration of 100 µM. Between one and two minutes after the addition of the test compound, the aggregation inducing agent (C-16 PAF-Sandoz-Hanover), dissolved in a buffer consisting of 0.01 M Tris-Tyrode's buffer with 0.25% bovine serum albumin (pH 7.4), is added to the PRP-containing cuvettes in an amount predetermined to give a consistent aggregation response (either 0.1 uM or 0.01 µM). All aggregations are allowed to proceed for 6 minutes from the addition of the inducing agent. The aggregation response is quantitated by determining the area under the curve (AUC). The AUC calculated for the inducing agent alone is considered to be one hundred percent. The potential percent inhibition of the aggregation response is determined by dividing the AUC generated in the presence of the compound by the AUC of the inducing agent alone, multiplying by 100 and then substracting from 100. The compounds demonstrating greater than 50% inhibition at 100 uM are evaluated at lower concentrations to generate an $IC_5$ (50% inhibitory concentration) value.

Moreover, it has been found that the compounds of formula I are indicated for use as platelet activating factor receptor antagonists as indicated by their ability to inhibit specific binding of $[^3H]$-PAF to platelets according to the Human Platelet PAF Receptor Assay test (Test A) as follows:

Human blood is obtained by venipuncture of healthy, human donors into an anti-coagulant mixture containing 3.15% of trisodium citrate and 20 ug/ml of Prostaglandin $I_2$ ($PGI_2$) in a ratio of blood to anti-coagulant of 9:1. Platelet rich plasma (PRP) is prepared by centrifugation (250 x g) of the blood for 20 minutes at room temperature. The PRP is then centrifuged (900 x g) for 10 minutes at room temperature and the platelet pellet is washed two times with Tris-Tyrode's (TT) solution having a pH of 7.4 and containing 0.25% bovine serum albumin (BSA), and to which has been added $PGI_2$ at a final concentration of 0.3 g/ml. The platelets are resuspended at 350,000 ul in TT/BSA containing 1.4 mM

$CaCl_2.2H_2O$ and 0.7 mM $MgCl_2.6H_2O$. All of the tests are conducted in duplicate and each of the test compounds is evaluated at concentrations of 100, 50, 1 and 0.1 uM. For each determination, the following solutions are mixed:

500 μl of the above-described platelets;

10 ul of $[^3H]$-PAF (40,000 counts per minute (cpm) to a final concentration of 1.5 μM); and

either

10 ul of the test compound at 50x the desired final concentration,

10 ul of vehicle (total bound), or

10 ul of 1.85 x $10^{-5}$M cold PAF (non-specifically bound).

Each mixture is allowed to incubate at room temperature for one hour, after which time the reaction is terminated by the addition of 500 ul of ice cold TT/BSA and centrifugation (900 x g) at 4°C for 10 minutes. The resultant supernatant is aspirated into scintillation vials and the pellet is washed with 250 ml of ice cold TT/BSA and centrifuged (900 x g) at 4°C for 10 minutes. The supernatants are then aspirated into the same scintillation vials as before and 10 ml of Scintiverse II (a liquid scintillation cocktail) is added to and mixed therewith. The pellets are resuspended in 500 μl of Scintiverse II and mixed well. An additional 2 ml of Scintiverse II is then added to the vials and, after mixing, the vials are counted for 1 minute in a liquid scintillation spectrometer. The amount of specific binding is calculated as the difference in cpm between the total bound $[^3H]$-PAF and non-specifically bound $[^3H]$-PAF. The percent inhibition of specific binding is determined by dividing the cpm specifically bound in the presence of the test compound by the cpm specifically bound in total, multiplying by 100 and then subtracting from 100. An $IC_{50}$ (50% inhibitory concentration) value is generated by evaluating the test compound over the full concentration range.

Furthermore, in view of their potential as PAF receptor antagonists, the compounds of formla I are indicated for use as inhibitors of PAF-mediated bronchoconstriction, which property was evaluated by the PAF-induced Pulmonary Inflation Pressure (PIP) Increase test (Test B) as follows:

Male guinea pigs, weighing between 300 and 400 g, are anesthetized, after which time trachea tube, carotid and jugular catheters are inserted. The test animal is then force ventilated employing a small animal Harvard respirator and the resistance to lung inflation (PIP) is measured utilizing a pressure transducer and recorder. The test compound is administered either orally at 30 minutes prior to or intravenously (jugular) at 5 minutes prior to the introduction of PAF. The PAF ($C_{18}$-Sandoz, Hanover) is dissolved in Tris-Tyrode's bovine serum albumin buffer and administered intravenously (jugular) at 100 ng/kg. Any blood pressure measurements taken are recorded from a transducer attached to the carotid catheter. Two responses are noted in the PIP recordings after the PAF is administered: 1) an immediate response which, in PAF-only treated test animals, averages out to between 70% and 80% more than the baseline PIP values. (This early response is also the greatest response and is, therefore, termed maximal PIP); and 2) the long term (at least 30 minutes) PIP response which slowly decreases to baseline. A reading at 15 minutes after the administration of PAF is termed the endpoint PIP. The effect of the test compound on the PIP response is determined by the difference between the percent increase in maximal PIP over baseline for the test animal to which has been administered PAF and the test compound compared to the test animal to which only PAF has been administered.

Still further, the compounds of formula I are indicated for use as inhibitors of PAF-mediated extravasation (the extrusion of plasma from the lumen of the blood vessels into the vessel wall and surrounding tissues) measured as a function of hemoconcentration according to the PAF-induced Extravasation test (Test C) as follows:

Male guinea pigs, weighing between 300 and 400 g, are anesthetized, after which time a femoral catheter is inserted. The test compound is administered intraarterially at one to five minutes prior to the introduction of PAF. The PAF ($C_{18}$-Sandoz, Hanover) is dissolved in Tris-Tyrode's bovine serum albumin buffer and administered intravenously (jugular) at 100 ng/kg.

To determine the hematocrit value, which is employed to index hemoconcentration and is defined as the percent of packed red blood cells in a sample of blood which is centrifuged to separate plasma from the cellular components, blood samples are collected in 50 ul heparinized hematocrit tubes. These samples are taken just prior to the injection of PAF, one minute subsequent to the injection of PAF and every two minutes thereafter until 15 minutes has lapsed subsequent to the injection of PAF. The tubes are then centrifuged and the percent of packed red blood cells (hematocrit) is measured (PAF induces a maximal increase in hematocrit at 5 to 7 minutes subsequent to the injection of PAF). The percent increase in hematocrit over the value prior to the injection of PAF is calculated. The hematocrit values obtained with the test compound are compared to the hemoconcentration values obtained with PAF alone and are expressed as percent inhibition of percent increase in hematocrit.

Yet still further, the compounds of formula I are indicated for use as inhibitors of PAF-induced hypotension as measured by their ability to inhibit the lowering of blood pressure levels induced by PAF according to the following test (Test D):

Male Wistar rats, weighing approximately 300 g, are anesthesized and their carotid arteries cannulated to enable their diastolic and systolic arterial blood pressure measurements to be recorded. PAF is then administered intravenously at either 100 or 500 ng/kg, and the blood pressure drop (within 10 sec.) and recovery time required to reach the pre-injection blood pressure level are measured. At 100 ng/kg, a 30% decrease in blood pressure and a 3 to 4 minute recovery time are observed, whereas at 500 ng/kg, 52% decrease in blood pressure and a 10 minute recovery time are observed. In order to measure the effectiveness of a compound for both the inhibition of blood pressure decreases and shortening of the recovery time, the test compound is administered intravenously over a range of between 5 and 7 dosage levels ( 1 or 2 test animals per dose) and between 1 and 5 minutes prior to the introduction of PAF to generate an $ED_{50}$.

Yet even still further, the compounds of formula I are indicated for use as inhibitors of PAF-induced ischemic intestinal necrosis, which property was measured in accordance with the following test (Test E):

Following essentially the procedure of F. Gonzalez-Crussi and W. Hsueh published in J. Amer. Pathol., 112, pgs. 127-135 (1983), male Sprague-Dawley rats, weighing approximately between 260 and 300 g, are anesthetised and their carotid arteries cannulated and connected to a blood pressure transducer and recorder. The test compound is introduced into a cannula inserted into the jugular vein at a time 10 minutes prior to the administration of PAF. The abdomen is then incised along the midline and 2 µg of PAF or 20 µg of LPS (lipopolysaccharide) immediately followed by 1 µg of PAF are injected into the abdominal aorta at the level of the renal artery. The abdominal incision is then covered with saline-moistened gauze and the intestine exposed and examined periodically up to 2 to 3 hours prior to sacrifice. Into the jugular vein is then injected 5 ml of 2% Evans Blue to assess the degree of intestinal perfusion. Blocks of intestinal tissue are then taken for microscopic examination to determine either the extent of necrosis or to verify the absence of necrosis when inhibited by the test compound. Microscopic changes in the intestine are assessed by hematoxylin and eosin staining. The test compound is assessed for its ability to alleviate or prevent the development of gross and micro-scopic lesions and may be expressed in terms of the number of animals in which inhibition is observed relative to the control (taken to be 100%).

The compounds are thus indicated for use in inhibiting or antagonising PAF and an indicated suitable daily dosage for this use is from about 1 to 500 mg preferably 1 to 50 mg suitably administered in divided dosages of 0.25 to 500 mg preferably 0.25 to 50 mg one to four times daily or in controlled release form. A typical oral dosage is 5 mg three times a day.

The compounds are further indicated for use in treating PAF mediated bronchoconstriction and extravasation, PAF induced hypotension and ischemic bowel disease and an indicated suitable daily dosage for this use is from about 10 to 2000 mg preferably 10 to 350 mg suitably

administered in divided dosages of 0.25 to 500 mg (esp. 0.25 to 350 mg) one to four times daily or in controlled release form. A typical oral dosage is 50 or 100 mg two or three times a day.

The invention therefore also concerns a method of inhibiting or antagonising platelet activating factor and of treating platelet activating factor mediated bronchoconstriction and extravasation, platelet activating factor induced hypotension and ischemic bowel disease, which comprises administering to a subject in need of such treatment a compound of formula I, as well as such compounds for use as pharmaceuticals e.g. in inhibiting or antagonising platelet activating factor and treating platelet activating factor mediated bronchoconstriction and extravasation, platelet activating factor induced hypotension and ischemic bowel disease.

The compounds may be administered alone, or in admixture with a pharmaceutically acceptable diluent or carrier, and, optionally other excipients, and administered orally in such forms as tablets, dispersible powders, granules, elixirs, capsules or suspensions or parenterally in such forms as sterile injectable solutions or suspensions.

The preferred pharmaceutical compositions from the standpoint of ease of preparation and administration are solid compositions, particularly tablets and hard-filled or liquid-filled capsules.

Such compositions also form part of the invention.

The following Examples, in which all temperatures are in °C illustrate the invention.

**EXAMPLE 1**

3-[2-[(2-Octadecyloxy)ethyl-5-oxo-tetrahydrofuran-2-yl] methoxyhydroxy-phosphinyloxy-ethane] thiazolium hydroxide-inner salt-4-oxide

R = $C_{18}H_{37}$, Y = O, m = 2, X = $\overset{O}{\overset{\|}{C}}$, y = ⊖, n = 2; 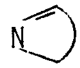 = thiazolium; p=0

a) Preparation of 1-benzyloxy-4-octadecyloxy-butane-2-ol

To 12.0 g of 60% sodium hydride in mineral oil (30 mmol; washed free of oil by the use of petroleum ether) was added 32.4 g (0.3 mol) of benzyl alcohol in 200 ml of dry dimethylformamide. The suspension was heated under a flow of nitrogen to 80° and maintained at this temperature for 45 minutes, after which time 66.1 g (0.19 mol) of an epoxide (prepared by the peracid oxidation of octadecyl-3-butenyl ether) in 100 ml of dimethylformamide was added and the temperature maintained at 80° for 15 hours. The solvent was then removed in vacuo and the residue chromatographed on silica gel employing a mixture of petroleum ether and diethyl ether in a ratio of 3:2 as the eluent to yield a wax-like solid.

b) Preparation of 1-benzyloxy-4-octadecyloxy-2-butanone

To a complex prepared at -60° from the addition of 10.4 ml of dry dimethyl sulfoxide to 8.9 g (70 mmol) of oxalyl chloride in 150 ml of methylene chloride, was added, dropwise, 27.7g (62.2 mmol) of the compound prepared in a) above. After stirring the mixture under a nitrogen atmosphere for 1 hour, 50 ml of triethylamine in 50 ml of methylene chloride was added and the resultant mixture was allowed to warm to 0° over a period of 30 minutes, after which time it was quenched with 75 ml of water. After the mixture was allowed to warm to room temperature, the organic layer was separated, washed with a saturated sodium chloride solution, dried over magnesium sulfate and concentrated in vacuo to afford an oil which solidified on standing. Flash chromatography on silica gel employing a mixture of petroleum ether and diethyl ether in a ratio of 7:3 as the eluent yielded a solid, m.p. 33°-34°.

c) Preparation of 3-benzyloxymethyl-3-hydroxy-1-octadecyloxy-hept-6-ene

1.12g (8 mmol) of 4-bromo-1-butene in 15 ml of dry ether was reacted with 200 mg of magnesium turnings at reflux under a nitrogen atmosphere for 1 hour. The resulting Grignard reagent was cooled to -60° and then treated with 2.22 g (5 mmol) of the compound prepared in b) above in 30 ml of ether. After 1 hour at -60°, the mixture was warmed overnight to room temperature and then quenched with a saturated aqueous ammonium acetate solution and partitioned. The organic layer was then washed twice with ammonium acetate, washed with a saturated sodium chloride solution and dried over magnesium sulfate, after which time the solvent was removed under reduced pressure. Purification of the crude product was effected on silica gel employing a mixture of petroleum ether and diethyl ether as the eluent to yield a low melting solid.

d) Preparation of 5-benzyloxymethyl-2-hydroxy-5-(2-octadecyloxyethyl)-tetrahydrofuran

6.15 g (12.3 mmol) of the compound prepared in c) above in 100 ml of methylene chloride was treated with ozone at -60°. After consumption of the olefin, 25 ml of dimethyl sulfoxide was added and the mixture allowed to warm to room temperature. The solvent was removed in vacuo and the crude product was purified on silica gel employing a mixture of petroleum ether and diethylether in a ratio of 7:3 as the eluent to yield a colourless oil.

e) Preparation of 5-benzyloxymethyl-5-(2-octadecyloxyethyl)-4,5-dihydro-2(3H)-furanone

To a solution of 1.6 g (7.4 mmol) of pyridinium chlorochromate in 25 ml of methylene chloride under a nitrogen atmosphere, was added 13.5 g (6.5 mmol) of the compound prepared in d) above in 25 ml of methylene chloride. After 18 hours at 25°, the solution was diluted with 150 ml of ether, filtered through silica gel and the filtrate evaporated to afford an oil. The oil was then flash chromatographed on silica gel employing a mixture of petroleum ether and diethyl ether in a ratio of 7:3 as the eluent to yield a colourless oil.

f) Preparation of 5-hydroxymethyl-5-(2-octadecyloxyethyl)-4,5-dihydro-2(3H)furanone

A mixture containing 10.2 g (21.83 mmol) of the compound prepared in e) above, 300 ml of a mixture of ethyl alcohol and water in a ratio of 9:1 and 1.5 g of 5% palladium on carbon (50% water content) was placed in a pressure bottle and hydrogenated at 40° under a pressure of 50 lbs. of hydrogen until uptake was complete. The catalyst was then filtered off and the filtrate concentrated in vacuo. The residue was crystallized from methanol to yield a solid.

g) Preparation of 2-bromoethyl-[(2-octadecyloxyethyltetrahydro-5-oxo-furan-2-yl)-methyl] phosphoric acid diester

To 14 g (33.9 mmol) of the compound prepared in f) above in 60 ml of dry benzene was added 9.9 g (40.7 mmol) of 2-bromoethyloxyphosphorodichloridate. The resultant solution was cooled on in ice-salt bath and treated dropwise, under a nitrogen atmosphere, with a solution of 3.5 ml of pyridine in 40 ml of benzene. After the ice-salt bath was removed, the mixture was allowed to warm to room temperature over a period of 6 hours. The volatiles were removed under reduced pressure and the residue was suspended in 500ml of water and heated on a steam bath for 80 minutes. After cooling to room temperature, the mixture was extracted with chloroform. The extract was dried over magnesium sulfate, filtered and, after removal of the solvent, a white solid was obtained.

h) Preparation of the title compound

2-bromoethyl-[(2-octadecyloxyethyl-tetrahydro-5-oxo-furan-2-yl)-methyl] phosphoric acid diester was placed into a pressure bottle and 22g of thiazole in 20 ml of toluene was added. The resultant mixture was heated at 65° for 50 hours, after which time it was cooled and evaporated in vacuo. The residue was then taken up with 500 ml of methanol and, after the addition of 10.5g of silver carbonate, the mixture was stirred for 90 minutes. The solids were then removed by filtration and the filtrate evaporated under reduced pressure to yield the crude product as a brown residue. The crude product was then purified on silica gel

and eluted successively with a 5% solution of methanol in methylene chloride, a 20% solution of methanol in methylene chloride and finally a solution of methylene chloride, methanol and water in a ratio of 10:5:1 to yield the title compound as a white solid, m.p. 200°-205° (dec.).

**EXAMPLE 2**

3-[2-[(2-Octadecyloxymethyltetrahydrofuran-2-yl-methoxy)-hydroxy-phosphinyloxy]-ethane]-thiazolium hydroxide inner salt-4-oxide

a) Preparation of 2-hydroxymethyl-2-octadecyloxymethyltetrahydrofuran

To a mixture of 2.64g (20 mmol) of 2,2-bishydroxymethyltetrahydrofuran and 2.20 g (6.6 mmol) of octadecyl bromide in 8 ml of a dimethylsulfoxide-tetrahydrofuran solution in a 1:1 ratio was added 1.84 g (26.4 mmol) of finely powdered potassium hydroxide and the resultant mixture was stirred at room temperature for 2 hours. The mixture was then poured into 100 ml of water, diluted with a saturated sodium chloride solution and extracted with ether. The ether extract was then washed with saturated sodium chloride and dried over sodium sulfate. The solvents were then removed to yield the crude product as a low-melting solid. The crude product was then chromatographed on silica gel employing methyl-t-butyl ether and hexane in a 3:1 ratio as the eluent to yield a white, waxy solid.

b) Preparation of 2-bromoethyl-[(2-octadecyloxymethyltetrahydrofuran-2-yl)-methyl]phosphoric acid diester

To 0.244g of bromoethoxyphosphordichloridate in 2.5 ml of benzene was added 0.322g (0.84 mmol) of the compound prepared in a) above and, after cooling the resultant mixture on an ice bath, the cooled mixture was treated dropwise with 82 µl of dry pyridine. The ice bath was then removed and the mixture stirred, under a nitrogen atmosphere, for 5 hours. The solvent was then removed in vacuo and to the residue was added 4 ml of water. The mixture was then heated on a steam bath for 15 minutes, then cooled to room temperature, diluted with water and extracted with ether. The ether extracts were then washed with water, dried over sodium sulfate and, after removal of the solvents, a foam was obtained.

c) Preparation of the title compound

To a pressure bottle containing 1 ml of a mixture of thiazole and toluene in a 1:1 ratio was added 2-bromoethyl-[(2-octadecyloxymethyltetrahydrofuran-2-yl)methyl] phosphoric acid diester and, after sealing the bottle, the mixture was heated for 6 days. The volatiles were then removed in vacuo and the residue was then taken up in ethanol. 0.5 g of silver carbonate was then added and the mixture stirred for 1 hour, after which time it was filtered through Celite and the filtrate evaporated to dryness. To the resultant residue was added 10 ml of methanol and 100 mg of activated charcoal and the mixture was then heated for 5 minutes at 50°. The solids were then removed by filtration and the filtrate evaporated under reduced pressure to yield the crude product. The crude product was then purified on silica gel in a manner analogous to that described above in Example 1 to yield the title compound as a solid, m.p. 140° (dec.).

**EXAMPLE 3**

3-[2-[(2-Octadecylaminocarbonyloxymethyl tetrahydrofuran-2-yl-methoxy)-hydroxyphosphinyloxy]-ethane]-thiazolium hydroxide inner salt-4-oxide

a) Preparation of 2-hydroxymethyl-2-octadecylaminocarbonyloxy tetrahydrofuran

To a mixture of 1.9g (14.4 mmol) of 2,2-bishydroxymethyltetrahydrofuran in 10 ml pyridine was added, at room temperature and under a nitrogen atmosphere, a solution of 4.04g (13.7 mmol) of _n_-octadecylisocyanate in 15 ml of pyridine. The resultant mixture was heated to 60° and maintained at this temperature for 3 hours, after which time the solvent was removed in vacuo to yield a residue which was partitioned in a mixture of methylene chloride and 2N hydrochloric acid. The organic layer was then washed successively with saturated sodium chloride, 2N hydrochloric acid, saturated sodium bicarbonate and saturated sodium chloride and dried over magnesium sulfate. The solvent was then removed and the residue chromatographed on silica gel employing methyl-_t_-butyl ether as the eluent to yield a white solid.

The reaction was continued analogously to Example 1g and h) to yield the crude product via 2-bromoethyl-[(2-octadecylaminocarbonyloxymethyl-tetrahydrofuran-2-yl)methyl]-phosphoric acid diester. This was then dissolved in a mixture of tetrahydrofuran and water in a ratio of 19:1 and the resultant solution was then passed through a column of Amberlite MB-3 ion-exchange resin. The eluate was then evaporated in vacuo and chromatographed in essentially the manner described above in Example 1 to obtain a product which was precipitated from methylene chloride with acetone to yield the title compound as a creamy-white solid, m.p., 170-175° (dec.).

**EXAMPLE 4**

3-[2-[(2-Octadecylaminocarbonyloxymethyl tetrahydrofuran-2-yl-methoxy)-hydroxyphosphinyloxy]-ethane]-thiazolium hydroxide-4-oxide, bromide salt

Analogous to Example 1h (but omitting silver carbonate) and starting from the bromoethyl compound of Example 3.

**EXAMPLE 5**

2-[Hydroxy(tetrahydro)-2-(octadecyl-5-oxo-2-furanyl)-methoxyphosphinyl-oxy]-ethane thiazolium hydroxide-inner salt-4-oxide

Analogous to Example 1a)-h) starting from 1-epoxyeicosane in place of octadecyl-3-butenylether to obtain the title compound as a white solid m.p.> 122° (dec.).

**EXAMPLE 6**

2-[Hydroxy(tetrahydro)-2-(octadecyl-2-furanyl)-methoxyphosphinyloxy]-ethane thiazolium hydroxide-inner salt-4-oxide

a) Preparation of 2-benzyloxymethyl-2-octadecyl-tetrahydrofuran

11.5g (26 mmol) of 5-benzyloxymethyl-2-hydroxy-5-octadecyltetrahydro-furan was dissolved in 120 ml of dichloromethane containing 4.54g (39 mmol) of triethylsilane and the reaction mixture was cooled under a nitrogen atmosphere to -20°.To the cooled mixture was added 4.26g (30 mmol) of boron trifluoride etherate and, after 1 hour, a saturated aqueous sodium bicarbonate solution was added. The resultant mixture was then warmed to room temperature and after being submitted to extractive isolation, chromatography on silica gel yielded a colourless oil.

The reaction was continued analogously to Example 1f-h) to yield the title compound as a white solid m.p. 198-204° (dec.).

**EXAMPLE 7**

3-[2-[(2-Octadecylaminocarbonyloxymethyl-tetrahydrofuran-2-yl-methoxy)-hydroxyphosphinyloxy]-ethane]-quinolinium hydroxide-inner salt-4-oxide

Analogous to 1h) starting from the bromoethyl compound of Example 3 and quinoline m.p.> 105° (dec.).

**EXAMPLE 8**

3-[2-[(2-Octadecylaminocarbonyloxymethyl-tetrahydrofuran-2-yl-methoxy)-hydroxyphosphinyloxy]-hexane]-thiazolium hydroxide-inner salt-4-oxide

Analogous to Example 1g) and h) starting from the compound of Example 3a and 6-bromohexylphosphorodichloridate, m.p. 65-70° (dec.).

**EXAMPLE 9**

3-[2-[(2-(9-Octadecenyl)aminocarbonyloxymethyl-tetrahydrofuran-2-yl-methoxy)-hydroxyphosphinyloxy]-ethane]-thiazolium hydroxide-inner salt-4-oxide

Analogous to Example 3a) and Example 1g) and h) using n-octadec-9-enylisocyanate in place of n-octadecylisocyanate, a waxy solid was obtained.

**EXAMPLE 10**

cis-1-(2-[Hydroxy[[tetrahydro-5-[(octadecylaminocarbonyl)oxy]methyl]furan--2-yl]methoxyphosphinyloxy]ethyl)-quinolinium hydroxide, inner salt-4-oxide ($R=C_{18}H_{37}$; Y = $-\underset{H}{N}-\underset{O}{\overset{\|}{C}}-O-$; m = 1; T = 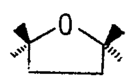 ; n = 1;

y = ⊖; q = 0; p = 2; 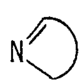 = quinolinium

a) Preparation of cis-2-[(octadecylaminocarbonyl)oxy]methyl-5-hydroxymethyl tetrahydrofuran

To 10.1g (0.077 mol) of cis-2,5-bis(hydroxymethyl)tetrahydrofuran dissolved in 50 ml of pyridine was added, at room temperature and under a nitrogen atmosphere, 22.5g (0.077 mol) of n-octadecyl isocyanate. The resultant mixture was then heated to 60° and, after maintaining this temperature for 12 hours, the mixture was cooled to 25° resulting in the formation of a precipitate. 300 ml of diethyl ether was then added and, after filtering, the solid collected was discarded. The filtrate

was then concentrated at reduced pressure to afford an oil which, upon being dried at 50° and 0.1 mm of mercury for 30 minutes, yielded the crude product as a light yellow solid. The crude product was then chromatographed on silica gel employing a mixture of hexane and acetone (in a 3:1 ratio by volume) as the eluent to yield a white solid.

b) Preparation of cis-1-{2-[hydroxy[[tetrahydro-5-[(octadecylaminocarbonyl)oxy]methyl]furan-2-yl]methoxyphosphinyloxy]ethyl}-bromide

To 1.28g (3 mmol) of the compound prepared in a) above dissolved in 15ml of dry benzene was added 1.16g (4.8 mmol) of 2-bromoethyloxy phosphorodichloridate dissolved in 6 ml of dry benzene. The resultant solution was then cooled in an ice bath and treated dropwise, under a nitrogen atmosphere, with a solution of 0.38g (4.8 mmol) of pyridine dissolved in 6 ml of dry benzene. After 5 minutes, the ice bath was removed and the mixture was allowed to warm to room temperature over a period of 5 hours. 10 ml of water was then added and, with stirring, the mixture was heated to 60° and maintained at this temperature for 30 minutes. After cooling to room temperature, the mixture was partitioned between diethyl ether and water. The organic layer was then dried over sodium sulfate, filtered and, after the solvent was removed, a solid was obtained

c) Preparation of the title compound

To 1.8g of cis-1-{2-[hydroxy[[tetrahydro-5-[(octadecylaminocarbonyl]-oxy]methyl]furan-2-yl]methoxyphosphinyloxy]ethyl}bromide was added 5 ml of quinoline and the resultant mixture was heated, with stirring and under a nitrogen atmosphere, to 80° and maintained at this temperature for 16 hours. The resultant brown solution was then cooled and diluted with hexane which resulted in the formation of a precipitate. The solid was then separated from the solution and chromatographed on silica gel employing a mixture of methylene chloride, methanol and water (in an 80:18:2 ratio by volume) as the eluent to afford the crude product as a light brown solid. The crude product was then purified on silica gel and eluted successively with methylene chloride and a mixture of methylene chloride and methanol (in a 4:1 ratio by volume) to yield a tan-coloured

foam which was taken up in methanol and diluted with diethyl ether to yield several crops of a fluffy white precipitate. The precipitates were then taken up in a mixture of methylene chloride and methanol (in a 6:4 ratio by volume) and concentrated to yield the title compound as a beige solid on drying, m.p. 56-60° (depending upon degree of hydration).

**EXAMPLE 11**

cis-1-(2-[Hydroxy[[tetrahydro-5-[(octadecylaminocarbonyl)oxy]methyl]furan-2-yl]methoxyphosphinyloxy]ethyl)thiazolium hydroxide, inner salt-4-oxide

Analogous to Example 10c) using thiazole in place of quinoline and precipitating with diethylether. The crystals were collected and chromatographed on silica gel employing a mixture of chloroform, methanol and water (in a 10:5:1 ratio by volume) as the eluent to afford a white solid. The solid was then triturated with a mixture of acetone and diethyl ether (in a 1:1 ratio by volume) to yield the title compound as a white solid, m.p. 105-110°.

**EXAMPLE 12**

cis-1-(2-[Hydroxy[[tetrahydro-5-[(octadecyloxy]methyl]furan-2-yl]methoxyphosphinyloxy]ethyl)-quinolinium hydroxide, inner salt-4-oxide

a) Preparation of cis-2-(octadecyloxy)-methyl-5-hydroxymethyl tetrahydrofuran

To 9.24g (0.07 mol) of cis-2,5-bis(hydroxymethyl)-tetrahydrofuran dissolved in 40 ml of a 1:1 mixture of tetrahydrofuran and dimethyl sulfoxide was added 5.6g (0.1 mol) of finely pulverized potassium hydroxide and, dropwise with stirring over a period of 30 minutes, 13.5g (0.04 mol) of 1-bromooctadecane dissolved in 40 ml of 1:1 mixture of tetrahydrofuran and dimethylsulfoxide. The resultant yellow mixture was stirred at room temperature (25°), under a nitrogen atmosphere, for a period of 16 hours, after which time it was concentrated under reduced pressure to remove the solvents. The resultant viscous oil was dissolved in 500 ml of diethyl ether and washed with 100 ml of water. The ethereal solution was dried and concentrated to yield the crude product as a waxy solid. The crude product was then chromatographed on silica gel employing a mixture of petroleum ether and acetone (in an 85:15 ratio

by volume) as the eluent to yield, after concentration, a white waxy solid.

b) Preparation of cis-1-{2-[hydroxy[[tetrahydro-5-[octadecyloxy]-methyl] furan-2-yl]methoxyphosphinyloxy]ethyl}-bromide

To 3.8g (0.01 mol) of the compound prepared in a) above dissolved in 50ml of dry benzene was added 3.6g (0.015 mol) of 2-bromoethyloxy-phosphorodichloridate dissolved in 10 ml of dry benzene. The resultant solution was then cooled in an ice bath and treated dropwise, under a nitrogen atmosphere, with a solution of 1.2g of pyridine dissolved in 10ml of dry benzene. After 5 minutes, the ice bath was removed and the mixture was allowed to warm to room temperature, with stirring, over a period of 16 hours. 10 ml of water was then added and, with stirring, the mixture was heated to 60° and maintained at this temperature for 45 minutes. After cooling to room temperature, the mixture was partitioned between diethyl ether and water. The organic layer was then dried over sodium sulfate, filtered and, after the solvent was removed, the crude product was obtained as an oily solid. The crude product was then chromatographed on silica gel employing, sequentially as the eluents, a mixture of petroleum ether and acetone (in a 70:30 ratio by volume), a mixture of acetone and petroleum ether (in a 1:1 ratio by volume) and a mixture of methylene chloride and methanol (in an 85:15 ratio by volume). Concentration under reduced pressure yielded a white, waxy solid.

Preparation of the title compound.

To 3.4g of cis-1-{2-[hydroxy[[tetrahydro-5-[octadecyloxy]-methyl]-furan-2-yl]methoxy-phosphinyloxy]ethyl}bromide was added 10ml of quinoline and the resultant mixture was heated, with stirring and under a nitrogen atmosphere, to 80° and maintained at this temperature for 16 hours. The resultant brown solution was then cooled and diluted with diethyl ether which resulted in the formation of a brown precipitate. The precipitate was discarded and the mother liquor was concentrated successively under reduced pressure and at 0.2 mm of mercury to afford the crude product

as a brown syrup. The crude product was then chromatographed on silica gel employing a mixture of methylene chloride, methanol and water (in an 80:18:2 ratio by volume) as the eluent to afford, after concentration at reduced pressure, a tan foam. The foam was then subjected to preparative thin layer chromatography employing the same eluent mixture set forth above to yield, after concentration, the title compound as a beige solid on drying, m.p. 74-78° (dec.).

CLAIMS

1. A compound of formula I

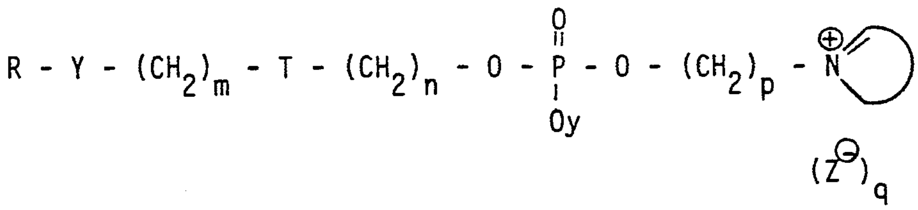

wherein R is n-$C_{12-20}$alkyl, alkenyl or alkynyl, $C_{12-24}$alkoxyalkyl, phenyl or $C_{7-9}$phenylalkyl,

Y is $CH_2$; O; 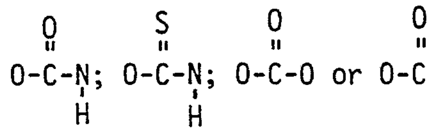 or

T is 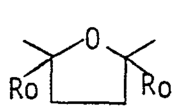 or 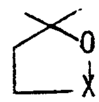

wherein Ro is hydrogen or methyl; and

X is $CH_2$ or 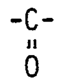

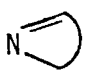 represents a 5- or 6-membered mono-cyclic ring optionally containing one further heteroatom selected from nitrogen or sulphur; or a 10-membered bicyclic ring optionally containing one further nitrogen atom; each of which rings may be unsubstituted or either mono-, di-, or tri-substituted by $C_{1-4}$alkyl or mono-substituted by $CF_3$, halo, COOH or $COOCH_3$

$Z^{\ominus}$ is a pharmaceutically acceptable anion,

m is 1 or 2;

n is 1 or 2;

p is 2 to 8; and

y is $\ominus$ and q is 0; or

y is H and q is 1.

**2.** 3-[2-[(2-Octadecylaminocarbonyloxymethyltetrahydrofuran-2-yl-methoxy)-hydroxyphosphinyloxy]-ethane]-thiazolium hydroxide-4-oxide as inner salt or as bromide.

**3.** cis-1-(2-[Hydroxy[[tetrahydro-5-[(octadecylaminocarbonyl)oxy]methyl]-furan-2-yl]methoxyphosphinyloxy]ethyl)-quinolinium hydroxide, inner salt-4-oxide.

**4.** A pharmaceutical composition comprising a compound according to Claim-1 together with a pharmaceutically acceptable diluent or carrier.

**5.** A compound according to Claim 1 for use as a pharmaceutical.

**6.** A compound according to Claim 1 for use in inhibiting PAF induced blood platelet aggregation or treating PAF mediated bronchoconstrition and extravasation and PAF induced hypotension and ischemic bowel disease.

**7.** A process for preparing a compound according to Claim 1 which comprises reacting a compound of formula c

$$R - Y - (CH_2)_m - T - (CH_2)_n - O - \underset{Oy}{\overset{O}{\overset{\|}{\underset{|}{P}}}} - O - (CH_2)_p - Br \qquad \underline{c}$$

with a compound of formula cc

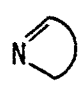 cc

wherein R, Y, T, m, n, p and y are as defined above, and recovering the product in inner salt form or in pharmaceutically acceptable acid addition salt form.

**8.** A compound according to Claim 1 substantially as hereinbefore described with reference to subgroups Ia', Ia", Ia"', Ib', Ib", Ib"', Ic', Ic", Ic"' and examples 1 to 12.